(19) Europäisches Patentamt
European Patent Office
Office européen des brevets

(11) **EP 4 757 112 A1**

(12) **EUROPEAN PATENT APPLICATION**
published in accordance with Art. 153(4) EPC

(43) Date of publication:
**10.06.2026 Bulletin 2026/24**

(21) Application number: **23948348.0**

(22) Date of filing: **04.08.2023**

(51) International Patent Classification (IPC):
***H02J 7/34*** (2006.01)

(52) Cooperative Patent Classification (CPC):
**H02J 7/34**

(86) International application number:
**PCT/JP2023/028508**

(87) International publication number:
**WO 2025/032626 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **JTEKT CORPORATION**
**Kariya-shi, Aichi 448-8652 (JP)**

(72) Inventors:
• **HIBINO Tokuaki**
  **Kariya-shi, Aichi 448-8652 (JP)**
• **SATO Fumihiko**
  **Kariya-shi, Aichi 448-8652 (JP)**
• **INABA Daiki**
  **Kariya-shi, Aichi 448-8652 (JP)**
• **NITTA Hiroki**
  **Kariya-shi, Aichi 448-8652 (JP)**
• **OTA Kohei**
  **Kariya-shi, Aichi 448-8652 (JP)**

(74) Representative: **Winter, Brandl - Partnerschaft mbB**
**Alois-Steinecker-Straße 22**
**85354 Freising (DE)**

(54) **POWER SUPPLY SYSTEM AND POWER SUPPLY DEVICE**

(57)     A power source system (1) has a power supply recipient (20) that operates by consuming power from a main power source (30) of a vehicle, and a power source device (10) that backs up power supply to the power supply recipient (20). Upon recognizing that a power switch (31) of the vehicle has been turned off, the power supply recipient (20) generates a stoppage permission signal (S2). The power source device (10) determines that an abnormality has occurred in a power source line (L2), on which the power switch (31) is provided, of a power supply path (L1 to L8) between the main power source (30) and the power supply recipient (20), when a first determination condition, a second determination condition, and a third determination condition are all met. The first determination condition is that voltage ($V_1$) on the power source line (I2) is lower than a voltage threshold value ($V_{1th}$). The second determination condition is that the power source device (10) has not received the stoppage permission signal (S2). The third determination condition is that a communication state between the power source device (10) and the power supply recipient (20) is normal.

Fig.1

## Description

TECHNICAL FIELD

The present disclosure relates to a power source system and a power source device.

BACKGROUND ART

Conventionally, there is known a power source device that uses an auxiliary power source to back up power supply to a power supply recipient when a main power source fails. For example, a power source device according to Patent Document 1 is provided on a power supply path between a main power source of a vehicle and a steering control device. The power source device includes an auxiliary power source. In a case in which the main power source is normal, power from the main power source is supplied to the steering control device via the power source device when a power switch of the vehicle is turned on. When the main power source fails, the main power source is disconnected from the power supply path, and also power from the auxiliary power source is supplied to the steering control device.

Related Art Documents

Patent Documents

Patent Document 1: Japanese Unexamined Patent Application Publication No. 2022-39399 (JP 2022-39399 A)

SUMMARY OF THE INVENTION

Problem to be Solved by the Invention

There are the following concerns regarding the power source device of Patent Document 1. That is to say, an abnormality in the power supply path may cause a drop in power source voltage. In this case, the power source device may erroneously recognize a drop in power source voltage due to an abnormality in the power supply path, as being a drop in power source voltage due to the power switch being turned off, and may stop operating.

Means for Solving the Problem

A power source system according to an aspect of the present disclosure includes a power supply recipient configured to operate by consuming power from a main power source of a vehicle, and a power source device configured to back up power supply to the power supply recipient. The power supply recipient is configured to, upon recognizing that a power switch of the vehicle has been turned off, generate a stoppage permission signal for permitting the power source device to stop operation. The power source device is configured to determine that an abnormality has occurred on a power source line, on which the power switch is provided, of a power supply path between the main power source and the power supply recipient, when a first determination condition, a second determination condition, and a third determination condition are all met. The first determination condition is that voltage on the power source line is lower than a voltage threshold value. The second determination condition is that the power source device has not received the stoppage permission signal. The third determination condition is that a communication state between the power source device and the power supply recipient is normal.

A power source device according to an aspect of the present disclosure includes an auxiliary power source configured to back up power supply to a power supply recipient configured to operate by consuming power from a main power source of a vehicle, and a control circuit configured to control charging and discharging of the auxiliary power source. The power supply recipient is configured to, upon recognizing that a power switch of the vehicle has been turned off, generate a stoppage permission signal for permitting the power source device to stop operation. The control circuit is configured to determine that an abnormality has occurred on a power source line, on which the power switch is provided, of a power supply path between the main power source and the power supply recipient, when a first determination condition, a second determination condition, and a third determination condition are all met. The first determination condition is that voltage on the power source line is lower than a voltage threshold value. The second determination condition is that the control circuit has not received the stoppage permission signal. The third determination condition is that a communication state between the control circuit and the power supply recipient is normal.

BRIEF DESCRIPTION OF THE DRAWINGS

[FIG. 1] FIG. 1 is a block diagram of a power source system according to an embodiment.
[FIG. 2] FIG. 2 is a circuit diagram of a power source device in FIG. 1.

MODES FOR CARRYING OUT THE INVENTION

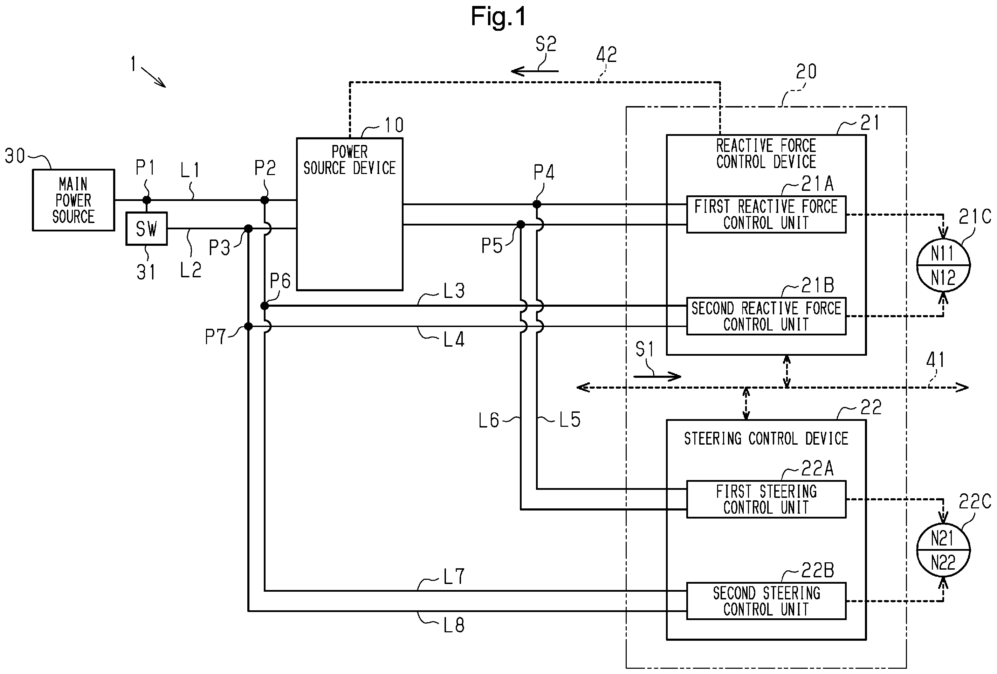

A power source system 1 according to an embodiment will be described. As illustrated in FIG. 1, the power source system 1 includes a power source device 10 and a steering control device 20 that is a power supply recipient. The power source device 10 is provided on a power supply path between a main power source 30 and the steering control device 20. The main power source 30 is, for example, a lithium-ion battery or a nickel metal hydride battery. Power of the main power source 30 is supplied to the steering control device 20 via the power source device 10. The power source device 10 backs up the power supply to the steering control device 20.

The steering control device 20 is one of control devices of a vehicle. The steering control device 20 controls motors that are drive sources for the steering device of the vehicle. The steering device is, for example, a steer-by-wire steering device, in which power transmission between a steering wheel and steered wheels is separated. The motors include a reactive force motor 21C and a steering motor 22C.

The reactive force motor 21C is a source of steering reactive force. The steering reactive force is force in a direction opposite to a steering direction of the steering wheel. The reactive force motor 21C is, for example, a three-phase brushless motor, and has two winding groups. The winding groups include a first winding group N11 and a second winding group N12. Torque of the reactive force motor 21C is applied to a steering shaft via a reducer.

The steering motor 22C is a source of steering force. The steering force is force for steering the steered wheels of a vehicle. The steering motor 22C is, for example, a three-phase brushless motor, and has two winding groups. The winding groups include a first winding group N21 and a second winding group N22. Torque of the steering motor 22C is applied to a steered shaft via a reducer. The steered shaft steers the steered wheels.

The steering control device 20 has a reactive force control device 21. The reactive force control device 21 controls power supply to the reactive force motor 21C. The reactive force control device 21 has a first reactive force control unit 21A and a second reactive force control unit 21B. The first reactive force control unit 21A controls power supply to the first winding group N11 of the reactive force motor 21C. The second reactive force control unit 21B controls power supply to the second winding group N12 of the reactive force motor 21C.

The steering control device 20 has a steering control device 22. The steering control device 22 controls power supply to the steering motor 22C. The steering control device 22 has a first steering control unit 22A and a second steering control unit 22B. The first steering control unit 22A controls power supply to the first winding group N21 of the steering motor 22C. The second steering control unit 22B controls power supply to the second winding group N22 of the steering motor 22C.

The reactive force control device 21 and the steering control device 22 are connected to each other via an in-vehicle network 41. The communication standard of the in-vehicle network 41 is, for example, CAN (Controller Area Network). The reactive force control device 21 and the steering control device 22 exchange information with each other via the in-vehicle network 41. The reactive force control device 21 and the steering control device 22 can also exchange information with various types of in-vehicle systems via the in-vehicle network 41. Communication via the in-vehicle network 41 is referred to as, for example, global CAN communication.

The reactive force control device 21 is connected to the power source device 10 via a communication line 42. The communication line 42 is a dedicated communication path that connects the reactive force control device 21 and the power source device 10 one-to-one, and is isolated from the in-vehicle network 41. The reactive force control device 21 and the power source device 10 exchange information with each other via the communication line 42. The communication standard between the reactive force control device 21 and the power source device 10 is, for example, CAN. The one-to-one communication via the communication line 42 is referred to as, for example, local CAN communication.

<Power Supply Path>

Next, the power supply path between the main power source 30 and the steering control device 20 will be described. The first reactive force control unit 21A is connected to the main power source 30 via a first power source line L1. The first reactive force control unit 21A is also connected to the main power source 30 via a second power source line L2. The first power source line L1 and the second power source line L2 connect the first reactive force control unit 21A and the main power source 30 via the power source device 10.

The second power source line L2 branches off from a first connection point P1 set on the first power source line L1. The first connection point P1 is set on the first power source line L1, between the main power source 30 and the power source device 10. A power switch 31 is provided on the second power source line L2. The power switch 31 includes, for example, an ignition switch, and is operated when the vehicle is caused to travel. Operating the power switch 31 switches conduction of the second power source line L2 between on and off. Turning on the power switch 31 turns on the power source to the steering control device 20. Turning off the power switch 31 interrupts the power source to the steering control device 20.

The power of the main power source 30 is supplied to a power circuit of the first reactive force control unit 21A via the first power source line L1. The power circuit is an electric circuit that handles a greater amount of power, and includes an inverter that converts direct current power from the main power source 30 into alternating current power, for example. Also, the power of the main power source 30 is supplied to a control circuit of the first reactive force control unit 21A via the second power source line L2. The control circuit is an electric circuit for controlling the reactive force motor 21C, and includes, for example, a CPU (Central Processing Unit), and memory. The memory includes RAM (Random Access Memory) and ROM (Read Only Memory).

The second reactive force control unit 21B is connected to the main power source 30, without going through the power source device 10. The second reactive force control unit 21B is connected to a second connection point P2 set on the first power source line L1, via a third power source line L3. The second connection point P2 is set between the first connection point P1 on the first power source line L1 and the power source device 10. The power of the main power source 30 is supplied to a power circuit of the second reactive force control unit 21B via the third power source line L3.

The second reactive force control unit 21B is connected to a third connection point P3 set on the second power source line L2, via a fourth power source line L4. The third connection point P3 is set on the second power source line L2, between the power switch 31 and the power source device 10. The power of the main power source 30 is supplied to a control circuit of the second reactive force control unit 21B, via the fourth power source line L4.

The first steering control unit 22A is connected to the main power source 30 via the power source device 10. The first steering control unit 22A is connected to a fourth connection point P4 set on the first power source line L1, via a fifth power source line L5. The fourth connection point P4 is set on the first power source line L1, between the power source device 10 and the first reactive force control unit 21A. The power of the main power source 30 is supplied to a power circuit of the first steering control unit 22A, via the fifth power source line L5.

The first steering control unit 22A is connected to a fifth connection point P5 set on the second power source line L2, via a sixth power source line L6. The fifth connection point P5 is set on the second power source line L2, between the power source device 10 and the first reactive force control unit 21A. The power of the main power source 30 is supplied to a control circuit of the first steering control unit 22A, via the sixth power source line L6.

The second steering control unit 22B is connected to the main power source 30, without going through the power source device 10. The second steering control unit 22B is connected to the first power source line L1 via a seventh power source line L7. Specifically, the second steering control unit 22B is connected to a sixth connection point P6 set on the third power source line L3, via the seventh power source line L7. The power of the main power source 30 is supplied to a power circuit of the second steering control unit 22B, via the seventh power source line L7.

The second steering control unit 22B is connected to the second power source line L2 via an eighth power source line L8. Specifically, the second steering control unit 22B is connected to a seventh connection point P7 set on the fourth power source line L4, via the eighth power source line L8. The power of the main power source 30 is supplied to a control circuit of the second steering control unit 22B, via the eighth power source line L8.

Note that the power from the main power source 30 is also supplied to various types of the in-vehicle systems via power source lines that are omitted from illustration. The power source lines include a lead that draws power from the main power source 30 and a lead that draws power from a load side of the power switch 31. The load side is the side of the power switch 31 opposite to the main power source 30, and is the side thereof to which a load is connected. The steering control device 20 is one of loads that consume power from the main power source 30.

<Configuration of Power Source Device 10>

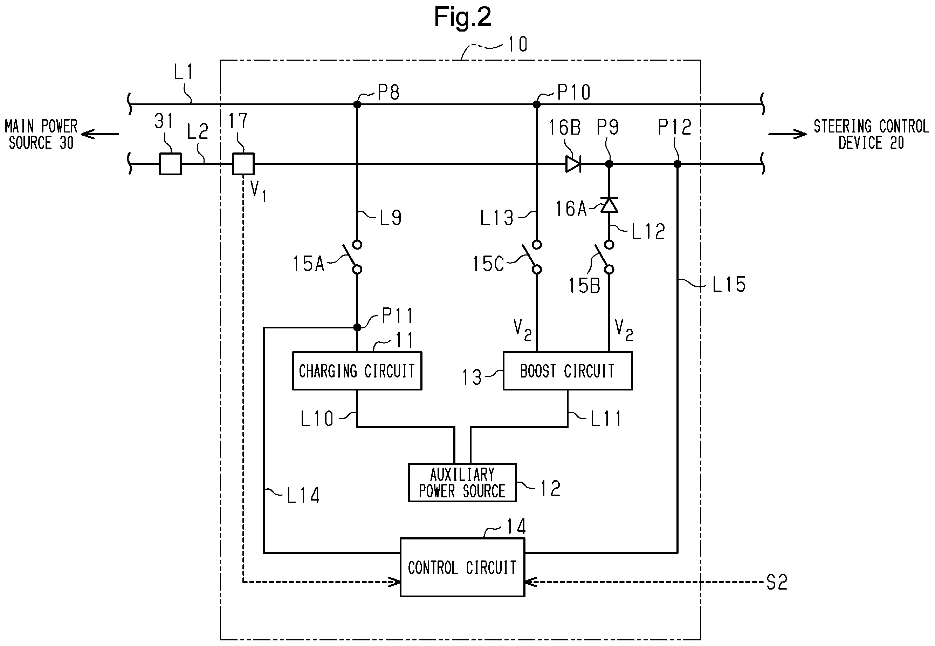

Next, a configuration of the power source device 10 will be described. As illustrated in FIG. 2, the power source device 10 includes a charging circuit 11, an auxiliary power source 12, a boost circuit 13, and a control circuit 14. The power source device 10 also includes a first switch 15A, a second switch 15B, a third switch 15C, a first diode 16A, a second diode 16B, and a voltage sensor 17.

The charging circuit 11 is a circuit for charging the auxiliary power source 12 using power from the main power source 30. An input terminal of the charging circuit 11 is connected to an eighth connection point P8 set on the first power source line L1, via a ninth power source line L9. An output terminal of the charging circuit 11 is connected to the auxiliary power source 12 via a tenth power source line L10.

The auxiliary power source 12 is used to back up the power supply to the steering control device 20. The auxiliary power source 12 is a power storage device that is capable of charging and discharging charges, examples thereof including a lithium-ion capacitor and a lithium-ion battery. The voltage of the auxiliary power source 12 is set to be lower than the voltage of the main power source 30. The voltage of the auxiliary power source 12 and the voltage of the main power source 30 are each terminal voltages, and are actual output voltages.

The boost circuit 13 is a circuit for boosting the output voltage of the auxiliary power source 12. The boost circuit 13 boosts the output voltage of the auxiliary power source 12 to a voltage that is higher than the terminal voltage of the auxiliary power source 12 and lower than the terminal voltage of the main power source 30, for example.

An input terminal of the boost circuit 13 is connected to the auxiliary power source 12 via an eleventh power source line L11. The boost circuit 13 has two output terminals. The first output terminal of the boost circuit 13 is connected to a ninth connection point P9 set on the second power source line L2, via a twelfth power source line L12. A second output terminal of the boost circuit 13 is connected to a tenth connection point P10 set on the first power source line L1, via a thirteenth power source line L13. The tenth connection point P10 is set between the eighth connection point P8 and the steering control device 20, on the first power source line L1.

The first switch 15A is provided on the ninth power source line L9. The first switch 15A interrupts and connects the ninth power source line L9. The second switch 15B is provided on the twelfth power source line L12. The second switch 15B interrupts and connects the twelfth power source line L12. The third switch 15C is provided on the thirteenth power source line L13. The third switch 15C interrupts and connects the thirteenth power source line L13.

The first diode 16A is provided in a portion of the twelfth power source line 12 between the second switch 15B and the ninth connection point P9. A cathode of the first diode 16A is connected to the ninth contact P9. An anode of the first diode 16A is connected to the second switch 15B. The second diode 16B is provided in a portion of the second power source line L2 between the power switch 31 and the ninth connection point P9. A cathode of the second diode 16B is connected to the ninth connection point P9. An anode of the second diode 16B is connected to the power switch 31. The first diode 16A and the second diode 16B are diodes for preventing backflow.

The voltage sensor 17 is provided on the second power source line L2 between the power switch 31 and the second diode 16B. The voltage sensor 17 detects a voltage $V_1$ on the second power source line L2.

The control circuit 14 is connected to an eleventh connection point P11 set on the ninth power source line L9, via a fourteenth power source line L14. The eleventh connection point P11 is set between the first switch 15A and the charging circuit 11, on the ninth power source line L9. Also, the control circuit 14 is connected to a twelfth connection point P12 set on the second power source line L2, via a fifteenth power source line L15. The twelfth connection point P12 is set between the ninth connection point P9 and the steering control device 30, on the second power source line L2.

The ninth power source line L9 and the tenth power source line L10 make up a charging path between the main power source 30 and the auxiliary power source 12. The eleventh power source line L11, the twelfth power source line L12, and the thirteenth power source line L13 make up a discharge path between the auxiliary power source 12 and the steering control device 20. The control circuit 14 controls the interrupting and connecting of the charging path and the discharging path by controlling on and off of the first switch 15A, the second switch 15B, and the third switch 15C.

The control circuit 14 has a processing circuit including one of the following three configurations A1, A2, and A3.

A1. One or more processors operating in accordance with a computer program that is software. The processor includes a CPU and memory.

A2. One or more dedicated hardware circuits, such as an application specific integrated circuit (ASIC) or the like, that execute at least part of processing from among various types of processing.

A3. A hardware circuit that combines the two configurations A1 and A2.

The memory is a computer-readable medium that stores a program in which is described processing or instructions for a computer. In the present embodiment, the computer is a CPU. The memory includes RAM and ROM. The CPU executes various types of control by executing programs stored in the memory at predetermined operation cycles.

The control circuit 14 detects whether the power switch 31 is on or off based on the voltage $V_1$ detected through the voltage sensor 17. When the value of voltage $V_1$ is below a first voltage threshold value, the control circuit 14 determines that the power switch 31 is turned off. When the value of voltage $V_1$ is at the first voltage threshold value or higher, the control circuit 14 determines that the power switch 31 is turned on.

The control circuit 14 monitors the voltage of the main power source 30. The control circuit 14 determines whether the voltage of the main power source 30 has dropped, based on the value of the voltage of the main power source 30. When the value of the voltage of the main power source 30 is below a second voltage threshold value, the control circuit 14 determines that the voltage of the main power source 30 has dropped. When the value of the voltage of the main power source 30 is at the second voltage threshold value or higher, the control circuit 14 determines that the voltage of the main power source 30 has not dropped. The second voltage threshold value is set based on a lower limit value of voltage required to properly operate the reactive force motor 21C and the steering motor 22C, for example, as well as the first reactive force control unit 21A and the first steering control unit 22A.

<Operations of Power Source Device 10 When Power is Turned On>

Next, operations of the power source device 10 when the power is turned on, i.e., when the power switch 31 is turned on, will be described. In an initial state, the power switch 31, the first switch 15A, the second switch 15B, and the third switch 15C are in a state of having been turned off.

When the power switch 31 is turned on, power from the main power source 30 is supplied to the control circuit 14 via the fifteenth power source line L15. The control circuit 14 starts up with the power source being turned on as a trigger, and executes an initial check. The initial check is an initial inspection before the power source device 10 is put into operation, and includes, for example, a hardware check, initialization of the CPU, and initialization of variables, flags, and so forth.

When the initial check is successfully completed, the control circuit 14 performs processing to transition the state of the power source device 10 to a backup standby state for the steering control device 20. That is to say, the control circuit 14 turns on the first switch 15A and the second switch 15B, while maintaining the third switch 15C in an off state. When the first switch 15A is turned on, power from the main power source 30 is charged into the auxiliary power source 12 via the charging circuit 11. The charging circuit 11 controls charging while monitoring, for example, charging current and charging voltage.

The backup standby state is a state in which the power source device 10 is able to back up the power supply to the steering control device 20, i.e., a state in which the power source device 10 is on standby to back up the power supply to the steering control device 20. When the power source device 10 is maintained in the backup standby state, the voltage of the main power source 30 has not dropped, and power is supplied from the main power source 30 to the steering control device 20 via the first power source line L1 and the second power source line L2.

The output voltage of the auxiliary power source 12 is boosted by the boost circuit 13. In a case in which the voltage of the main power source 30 has not dropped, voltage $V_2$ boosted by the boost circuit 13 is lower than the voltage of the main power source 30. Accordingly, the voltage $V_2$ boosted by the boost circuit 13 is not supplied to the steering control device 20 via the twelfth power source line L12. Also, the third switch 15C is maintained in the off state. Accordingly, the voltage $V_2$ boosted by the boost circuit 13 is not supplied to the steering control device 20 via the thirteenth power source line L13.

Note that the first diode 16A for preventing backflow is provided between the ninth connection point P9 on the twelfth power source line L12 and the second switch 15B. The first diode 16A prevents power from flowing from the main power source 30 to the boost circuit 13 via the second power source line L2 and the twelfth power source line L12.

In a case in which the voltage of the main power source 30 drops, power from the boost circuit 13 is immediately supplied to the steering control device 20 via the twelfth power source line L12 and the second power source line L2. This is because, in conjunction with the dropping of the voltage of the main power source 30, the voltage $V_2$ boosted by the boost circuit 13 becomes higher than the voltage of the main power source 30, and hence the voltage on the second power source line L2.

Specifically, the power from the boost circuit 13 is supplied to the control circuit of the first reactive force control unit 21A via the twelfth power source line L12 and the second power source line L2. Also, the power from the boost circuit 13 is supplied to the control circuit of the first steering control unit 22A via the twelfth power source line L12, the second power source line L2, and the sixth power source line L6. Accordingly, even if the power supply from the main power source 30 to the steering control device 20 is interrupted, the power supply to the control circuit of the first reactive force control unit 21A and the control circuit of the first steering control unit 22A is backed up by the auxiliary power source 12.

Note that the second diode 16B for preventing backflow is provided between the voltage sensor 17 and the ninth connection point P9 on the second power source line L2. The second diode 16B prevents power from flowing from the boost circuit 13 to the main power source 30 via the twelfth power source line L12 and the second power source line L2.

When the voltage of the main power source 30 drops, the control circuit 14 turns on the third switch 15C. Thus, power from the boost circuit 13 is supplied to the steering control device 20 via the thirteenth power source line L13 and the first power source line L1. This is because, in conjunction with the dropping of the voltage of the main power source 30, the voltage $V_2$ boosted by the boost circuit 13 becomes higher than the voltage of the main power source 30, and hence the voltage on the first power source line L1.

Specifically, the power from the boost circuit 13 is supplied to the power circuit of the first reactive force control unit 21A via the thirteenth power source line L13 and the first power source line L1. Also, the power from the boost circuit 13 is supplied to the power circuit of the first steering control unit 22A via the thirteenth power source line L13, the first power source line L1, and the fifth power source line L5. Accordingly, even if the power supply from the main power source 30 to the steering control device 20 is interrupted, the power supply to the power circuit of the first reactive force control unit 21A and the power circuit of the first steering control unit 22A is backed up by the auxiliary power source 12.

Note that a third diode, omitted from illustration, for preventing backflow, is provided between the eighth connection point P8 and the tenth connection point P10 on the first power source line L1. The third diode prevents power from flowing from the boost circuit 13 to the main power source 30 via the thirteenth power source line L13 and the first power source line L1.

<Operations of Power Source Device 10 when Power Source is Interrupted>

Next, operations of the power source device 10 when the power supply is interrupted, i.e., when the power switch 31 is turned off, will be described. In the initial state, the power switch 31, the first switch 15A, and the second switch 15B are in the on state, and the third switch 15C is in the off state. The voltage of the main power source 30 has not dropped.

When the power switch 31 is turned off, the supply of power from the main power source 30 to the control circuit 14 via the fifteenth power source line L15 is stopped. However, the control circuit 14 maintains the first switch 15A and the second switch 15B in the on state, even when the power switch 31 is turned off. Accordingly, the supply of power from the main power source 30 to the control circuit 14 via the fourteenth power source line L14 continues. Thus, the control circuit 14 can continue to operate even after the power switch 31 is turned off.

When the power switch 31 is turned off, the control circuit 14 executes a predetermined shutdown sequence. The shutdown sequence is a series of processing that is executed to properly shut down functions of the power source device 10. After the execution of the shutdown sequence is successfully completed, the control circuit 14 turns off the first switch 15A and the second switch 15B. When the first switch 15A is turned off, the supply of power from the main power source 30 to the control circuit 14 via the fourteenth power source line L14 is interrupted. Accordingly, the operations of the control circuit 14, and hence the operations of the power source device 10, stop.

Note that even in a case in which the voltage of the main power source 30 drops, and the power switch 31 is turned off while the power source device 10 is backing up the power supply to the steering control device 20, the control circuit 14 starts executing the shutdown sequence. After completing the execution of the shutdown sequence, the control circuit 14 turns off the first switch 15A, the second switch 15B, and the third switch 15C. Thus, operations of the power source device 10 stop.

<Abnormality on Power Supply Path>

There are the following concerns regarding the power source device 10 configured in this way. That is to say, it is conceivable that an abnormality will occur on the second power source line L2, causing the voltage $V_1$ of the second power source line L2 to drop. The abnormality includes disconnection of the second power source line L2. A position of the disconnection is, for example, a portion of the second power source line L2 between the voltage sensor 17 and the second diode 16B. **In** this case, the control circuit 14 may erroneously recognize the drop in voltage $V_1$ due to the abnormality on the second power source line L2 as being a drop in voltage $V_1$ due to the power switch 31 being turned off, and may erroneously stop operations of the power source device 10.

Therefore, in the present embodiment, the power source system 1 employs the following configuration, in order to distinguish between a drop in voltage $V_1$ due to the power switch 31 being turned off and a drop in voltage $V_1$ due to an abnormality on the second power source line L2.

<Stoppage Determination Processing of Steering Control Device 20>

The first reactive force control unit 21A acquires a power source state signal S1 via the in-vehicle network 41. The power source state signal S1 is an electrical signal that indicates the state of the power switch 31 recognized by various types of the in-vehicle systems, i.e., the power supply state to various types of the in-vehicle systems via the power switch 31. The first reactive force control unit 21A recognizes whether the power switch 13 is on or off, based on the power source state signal S1. The second reactive force control unit 21B, the first steering control unit 22A, and the second steering control unit 22B, also acquire the power source state signal S1 via the in-vehicle network 41, and recognize whether the power switch 13 is on or off based on the power source state signal S1 that is acquired, in the same way as with the first reactive force control unit 21A.

When the power switch 13 is recognized as being off, the first reactive force control unit 21A, the second reactive force control unit 21B, the first steering control unit 22A, and the second steering control unit 22B execute stoppage determination processing. The stoppage determination processing is processing for determining whether it is acceptable for the first reactive force control unit 21A, the second reactive force control unit 21B, the first steering control unit 22A, and the second steering control unit 22B to stop their respective operations. The stoppage determination processing includes processing in which the first reactive force control unit 21A, the second reactive force control unit 21B, the first steering control unit 22A, and the second steering control unit 22B confirm with each other whether they recognize that the power switch 13 is off.

When it is determined through the execution of the stoppage determination processing that it is acceptable to stop the operations of the first reactive force control unit 21A, the first reactive force control unit 21A permits the power source device 10 to stop operating. That is to say, the first reactive force control unit 21A generates a stoppage permission signal S2 for the power source device 10 and transmits the stoppage permission signal S2 that is generated to the power source device 10 via the communication line 42. The stoppage permission signal S1 is an electrical signal that permits the power source device 10 to stop operations thereof. After transmitting the stoppage permission signal S2, the first reactive force control unit 21A executes a predetermined shutdown sequence, and stops operations thereof when the shutdown sequence is completed. The shutdown sequence is a series of processing that is executed when the first reactive force control unit 21A stops operations thereof.

When the second reactive force control unit 21B, the first steering control unit 22A, and the second steering control unit 22B determine that their own operations may be stopped through execution of stoppage determination processing, they execute the shutdown sequence in the same manner as the first reactive force control unit 21A, and stop operations thereof when the shutdown sequence is completed.

<Abnormality Determination Processing for Power Source Device 10> The control circuit 14 executes abnormality determination processing. Abnormality determination processing is processing for distinguishing between a drop in voltage $V_1$ due to the power switch 31 being turned off, and a drop in voltage $V_1$ due to an abnormality on the second power source line L2. The control circuit 14 executes the abnormality determination processing in accordance with a predetermined control cycle, triggered by the power switch 31 being turned on. The control circuit 14 determines whether the drop in voltage $V_1$ is caused by the power switch 31 being turned off, based on whether abnormality determination conditions are met. The abnormality determination conditions include first to third determination conditions B1 to B3.

### B1. $V_1 < V_{1th}$

B2. The stoppage permission signal S2 is not received.
B3. The local CAN communication via the communication line 42 is normal.

Here, "$V_{1th}$" is a first voltage threshold value, and is set based on the voltage $V_1$ of the second power source line L2 when the power switch 31 is turned off. The control circuit 14 has a function of detecting errors in the local CAN communication. The errors include, for example, a bit error, a stuff error, a format error, an acknowledgement error, and a CRC error (cyclic redundancy checksum error). When no error in the local CAN communication is detected, the control circuit 14 determines that the local CAN communication is normal.

When all of the first to third determination conditions B1 to B3 are met, the control circuit 14 determines that the drop in voltage $V_1$ is not due to the power switch 31 being turned off, but is due to an abnormality on the second power source line L2. This is based on the following perspective. That is to say, in a case in which the voltage $V_1$ of the second power source line L2 drops even though the local CAN communication is normal and the stoppage permission signal S2 has not been received from the first reactive force control unit 21A, there is a high likelihood that an abnormality, such as a disconnection or the like, has occurred on the second power source line L1.

When it is determined that an abnormality has occurred on the second power source line L2, the control circuit 14 continues operations of the power source device 10 even though the voltage $V_1$ on the second power source line L2 is lower than the voltage threshold value $V_{1th}$.

In a case in which the voltage $V_1$ of the second power source line L2 drops due to an abnormality on the second power source line L2, power from the boost circuit 13 is immediately supplied to the control circuit of the first reactive force control unit 21A via the twelfth power source line L12 and the second power source line L2. Also, the power from the boost circuit 13 is immediately supplied to the control circuit of the first steering control unit 22A via the twelfth power source line L12, the second power source line L2, and the sixth power source line L6.

This is because, in conjunction with the voltage $V_1$ of the second power source line L2 dropping, the voltage $V_2$ boosted by the boost circuit 13 becomes higher than the voltage $V_1$ of the second power source line L2.

Accordingly, even if the power supply via the second power source line L2 is interrupted, the power supply to the control circuit of the first reactive force control unit 21A and the control circuit of the first steering control unit 22A is backed up by the auxiliary power source 12. Since the drop in the voltage $V_1$ of the second power source line L2 is not due to a voltage drop in the main power source 30, the control circuit 14 maintains the third switch 15C in the off state.

Note that the control circuit 14 may be configured to execute predetermined processing when determination is made that there is an abnormality on the second power source line L2. The processing includes, for example, processing for notifying a vehicle occupant that an abnormality has occurred on the second power source line L2.

When both the first determination condition B1 and the third determination condition B3 are met, and only the second determination condition B2 is not met, the control circuit 14 determines that the drop in voltage $V_1$ is caused by the power switch 31 being turned off. The second determination condition B2 is not met when the control circuit 14 has received the stoppage permission signal S2.

In a case in which the voltage $V_1$ of the second power source line L2 drops in a state in which the local CAN communication is normal and the stoppage permission signal S2 has been received from the first reactive force control unit 21A, there is a high likelihood that the power switch 31 has been turned off. This is because the stoppage permission signal S2 is a highly reliable electrical signal that reflects the state of the power switch 31 recognized by various types of the in-vehicle systems. The steering control device 20 generates the stoppage permission signal S2 when the various types of the in-vehicle systems recognize that the power switch 31 is off.

Upon recognizing that the power switch 31 is turned off, the control circuit 14 determines that the situation is such that stopping the operations of the power source device 10 is acceptable, and starts the execution of a predetermined shutdown sequence. The shutdown sequence is a series of processing that is executed to properly shut down functions of the power source device 10. After the execution of the shutdown sequence is successfully completed, the control circuit 14 turns off the first switch 15A and the second switch 15B. Turning off the first switch 15A interrupts the supply of power from the main power source 30 to the control circuit 14 via the fourteenth power source line L14. Accordingly, the operations of the control circuit 14, and hence the operations of the power source device 10, stop.

<Advantages of the Embodiment>

The present embodiment yields the following advantages.

(1) When all of the first to third determination conditions B1 to B3 are met, the power source device 10 determines that an abnormality has occurred on the second power source line L2, on which the power switch 31 is provided, out of the power supply path (L1 to L8) between the main power source 30 and the steering control device 20 that is the power supply recipient. The abnormality includes, for example, disconnection of the second power source line L2. The first determination condition B is that the voltage $V_1$ on the second power source line L2 is lower than the voltage threshold value $V_{1th}$. The second determination condition B2 is that the power source device 10 has not received the stoppage permission signal S2 from the steering control device 20. The third determination condition B3 is that the communication state between the power source device 10 and the steering control device 20 is normal.

In a case in which the voltage $V_1$ of the second power source line L2 on which the power switch 31 is provided drops, and also the stoppage permission signal S2 is not received from the steering control device 20, there is a high likelihood that an abnormality has occurred on the second power source line L2. This is because the steering control device 20 generates the stoppage permission signal S2 when the various types of the in-vehicle systems recognize that the power switch 31 is off. Accordingly, the power source device 10 can appropriately determine an abnormality on the second power source line L2. That is to say, the power source device 10 can distinguish between a drop in the voltage $V_1$ caused by the power switch 31 being turned off, and a drop in the voltage $V_1$ caused by an abnormality on the second power source line L2. Accordingly, the power source device 10 can be suppressed from erroneously recognizing a drop in power source voltage due to an abnormality on the second power source line L2, which is one of the power supply paths, for a drop in power source voltage due to the power switch 31 being turned off, and stopping operation.

(2) When both the first determination condition B1 and the third determination condition B3 are met and just the second determination condition B2 is not met, the power source device 10 determines that the power switch 31 has been turned off. In a case in which the voltage $V_1$ of the second power source line L2 on which the power switch 31 is provided drops, and also the stoppage permission signal S2 is received from the steering control device 20, there is a high likelihood that the power switch 31 has been turned off. This is since the steering control device 20 generates the stoppage permission signal S2 when the various types of the in-vehicle systems recognize that the power switch 31 is off. Accordingly, the power source device 10 can appropriately determine that the power switch 31 has been turned off.

(3) The power source device 10 and the steering control device 20 are connected one-to-one via a communication line 42 that is isolated from the in-vehicle network 41. The power source device 10 receives the stoppage permission signal S2 via the communication line 42. Accordingly, an increase in load on the in-vehicle network 41 can be suppressed, as compared to a case in which the power source device 10 receives the stoppage permission signal S2 via the in-vehicle network 41.

(4) The steering control device 20 acquires the power source state signal S1 via the in-vehicle network 41, and recognizes that the power switch 31 has been turned off based on the power source state signal S1 that is acquired. The power source state signal S1 is an electrical signal that indicates the state of the power switch 31 recognized by various types of the in-vehicle systems, i.e., the power supply state to various types of the in-vehicle systems via the power switch 31. Accordingly, the steering control device 20 can appropriately recognize that the power switch 31 has been turned off.

(5) The steering control device 20 controls the drive source of the steering device of the vehicle. The steering control device 20 is required to have higher operational reliability. The power source device 10 according to the present embodiment is suitable for the steering control device 20.

<Other Embodiments>

The present embodiment may be carried out modified as follows.

• The abnormality determination conditions for the power source device 10 may include the following fourth determination condition in addition to the first to third determination conditions B1 to B3.

$$B4.\ T > T_{th}$$

where "T" is time elapsed since the above-described first to third determination conditions B1 to B3 were met. "$T_{th}$" is a time threshold value. The time threshold value $T_{th}$ is set from the perspective of suppressing erroneous determination that an abnormality has occurred on the second power source line L2, in a case in which the first to third determination conditions B1 to B3 are temporarily met, for example.

It is conceivable that the first reactive force control unit 21A, the second reactive force control unit 21B, the first steering control unit 22A, and the second steering control unit 22B each recognize the power switch 13 being turned off at different timings. In this case, the timing of generating the stoppage permission signal S2 will be delayed by an amount corresponding to the time difference required to recognize that the power switch 13 is turned off. This is one factor in the first to third determination conditions B1 to B3 being temporarily met. Accordingly, the time threshold value $T_{th}$ is set taking into consideration the time difference required to recognize that the power switch 13 is turned off.

The power source device 10 finalizes the determination that an abnormality has occurred on the second power source line L2 when the elapsed time T after all of the first to third determination conditions B1 to B3 are met exceeds the time threshold value $T_{th}$. That is to say, when all of the first to fourth determination conditions B1 to B4 are met, the control circuit 14 finalizes the determination that the drop in voltage $V_1$ is not due to the power switch 31 being turned off, but is due to an abnormality on the second power source line L2. Accordingly, in a case in which all of the first to third determination conditions B1 to B3 are temporarily met, the power source device 10 can be suppressed from erroneously determining that an abnormality has occurred on the second power source line L2.

Note that the control circuit 14 may also be configured to finalize the determination that the drop in voltage $V_1$ is due to the power switch 31 being turned off when the elapsed time from having entered a state in which both the first determination condition B1 and the third determination condition B3 are met and just the second determination condition B2 is not met exceeds the time threshold value $T_{th}$.

- The control circuit 14 may notify the steering control device 20 of the backup state of the power source device 10 by local CAN communication via the communication line 42. The steering control device 20 is a higher-order device than the power source device 10.
- The second reactive force control unit 21, the first steering control unit 22A, or the second steering control unit 22B may generate the stoppage permission signal S2, and the stoppage permission signal S2 that is generated may be transmitted to the power source device 10 via the communication line 42.
- Depending on product specifications, the stoppage permission signal S2 may be transmitted to the power source device 10 via the in-vehicle network 41.

  - A configuration may be employed in which the reactive force motor 21C and the steering motor 22C each have a single winding group. In this case, a configuration may be employed in which the reactive force control device 21 has just the first reactive force control unit 21A, for example. Also, a configuration can be employed in which the third power source line L3 and the fourth power source line L4 are omitted from the power supply path between the main power source 30 and the steering control device 20.

- A configuration may be employed in which the steering motor 22C has a single winding group. In this case, a configuration can be employed in which the steering control device 22 has just the first steering control unit 22A, for example. Also, a configuration can be employed in which the seventh power source line L7 and the eighth power source line L8 are omitted from the power supply path between the main power source 30 and the steering control device 20.
- The object of control of the steering control device 20 may be an assist motor which is a drive source of an electric power steering system. The assist motor is a source of assisting force. The assisting force is a force in the same direction as the direction of operating the steering wheel. For the assist motor, a motor having a single winding group, or a motor having two winding groups, may be employed.
- The power supply recipient of the power source device 10 is not limited to the steering control device 20. The power supply recipient may be a control device that controls the drive of a traction motor of an electric vehicle or a hybrid electric vehicle. The power supply recipient of the power source device 10 may also be a control device that controls brakes of the vehicle.

## Claims

1. A power source system comprising:

   a power supply recipient configured to operate by consuming power from a main power source of a vehicle; and
   a power source device configured to back up power supply to the power supply recipient, wherein
   the power supply recipient is configured to, upon recognizing that a power switch of the vehicle has been turned off, generate a stoppage permission signal for permitting the power source device to stop operation,
   the power source device is configured to determine that an abnormality has occurred on a power source line, on which the power switch is provided, of a power supply path between the main power source and the power supply recipient, when a first determination condition, a second determination condition, and a third determination condition are all met,
   the first determination condition is that voltage on the power source line is lower than a voltage threshold value,
   the second determination condition is that the power source device has not received the stoppage permission signal, and
   the third determination condition is that a communication state between the power source device and the power supply recipient is normal.

2. The power source system according to claim 1, wherein the power source device is configured to finalize a determination that an abnormality has occurred on the power source line when an elapsed time since the first determination condition, the second determination condition, and the third determination condition are all met exceeds a time threshold value that takes into account a time difference for recognizing that the power switch is turned off.

3. The power source system according to claim 1 or 2, wherein the power source device is configured to determine that the power switch has been turned off when both the first determination condition and the third determination condition are met and only the second determination condition is not met.

4. The power source system according to claim 1 or 2, wherein

   the power source device and the power supply recipient are connected one-to-one via a communication line that is isolated from an in-vehicle network, and
   the power source device is configured to receive the stoppage permission signal via the communication line.

5. The power source system according to claim 1 or 2, wherein the power supply recipient is configured to acquire an electrical signal, indicating a power supply state to an in-vehicle system through the power switch, via an in-vehicle network, and to recognize that the power switch has been turned off based on the electrical signal that is acquired.

6. The power source system according to claim 1 or 2, wherein the power supply recipient is a steering control device configured to control a drive source of a steering device of the vehicle.

7. A power source device comprising:

   an auxiliary power source configured to back up power supply to a power supply recipient configured to operate by consuming power from a main power source of a vehicle; and
   a control circuit configured to control charging and discharging of the auxiliary power source, wherein
   the power supply recipient is configured to, upon recognizing that a power switch of the vehicle has been turned off, generate a stoppage permission signal for permitting the power source device to stop operation,

the control circuit is configured to determine that an abnormality has occurred on a power source line, on which the power switch is provided, of a power supply path between the main power source and the power supply recipient, when a first determination condition, a second determination condition, and a third determination condition are all met,
the first determination condition is that voltage on the power source line is lower than a voltage threshold value,
the second determination condition is that the control circuit has not received the stoppage permission signal, and
the third determination condition is that a communication state between the control circuit and the power supply recipient is normal.

# Fig.1

POWER SOURCE DEVICE — 10

MAIN POWER SOURCE — 30

SW — 31

REACTIVE FORCE CONTROL DEVICE — 21

FIRST REACTIVE FORCE CONTROL UNIT — 21A

SECOND REACTIVE FORCE CONTROL UNIT — 21B

STEERING CONTROL DEVICE — 22

FIRST STEERING CONTROL UNIT — 22A

SECOND STEERING CONTROL UNIT — 22B

N11 / N12 — 21C

N21 / N22 — 22C

EP 4 757 112 A1

# Fig.2

EP 4 757 112 A1

# EP 4 757 112 A1

## INTERNATIONAL SEARCH REPORT

| International application No. |
|---|
| **PCT/JP2023/028508** |

### A. CLASSIFICATION OF SUBJECT MATTER

*H02J 7/34*(2006.01)i
FI:  H02J7/34 G

According to International Patent Classification (IPC) or to both national classification and IPC

### B. FIELDS SEARCHED

Minimum documentation searched (classification system followed by classification symbols)

H02J7/34

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2015-49611 A (AUTONETWORKS TECHNOLOGIES, LTD.) 16 March 2015 (2015-03-16)<br>entire text, all drawings | 1-7 |
| A | JP 2021-136740 A (DENSO TEN LTD.) 13 September 2021 (2021-09-13)<br>entire text, all drawings | 1-7 |
| A | JP 2022-39399 A (JTEKT CORP.) 10 March 2022 (2022-03-10)<br>entire text, all drawings | 1-7 |

☐ Further documents are listed in the continuation of Box C.     ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **25 September 2023** | **03 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/028508**

| Patent document cited in search report | | | Publication date (day/month/year) | Patent family member(s) | | | Publication date (day/month/year) |
|---|---|---|---|---|---|---|---|
| JP | 2015-49611 | A | 16 March 2015 | US | 2016/0204633 | A1 | |
| | | | | entire text, all drawings | | | |
| | | | | WO | 2015/029769 | A1 | |
| | | | | CN | 105493377 | A | |
| JP | 2021-136740 | A | 13 September 2021 | (Family: none) | | | |
| JP | 2022-39399 | A | 10 March 2022 | US | 2022/0063712 | A1 | |
| | | | | entire text, all drawings | | | |
| | | | | EP | 3971056 | A2 | |
| | | | | CN | 114123458 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022039399 A